# EUROPÄISCHE PATENTSCHRIFT

(11) **EP 1 169 577 B1**
(45) Veröffentlichungstag und Bekanntmachung des Hinweises auf die Patenterteilung: **22.10.2003**
(21) Anmeldenummer: 01911438.8
(22) Anmeldetag: 09.02.2001
(51) Int. Cl.: F16C 11/06

(54) **KUGELGELENK**
BALL-AND-SOCKET-JOINT
JOINT A ROTULE

(30) Priorität: 09.02.2000 DE 10005988
(43) Veröffentlichungstag der Anmeldung: 09.01.2002
(73) Patentinhaber: ZF Lemförder Metallwaren AG, 49441 Lemförde (DE)
(72) Erfinder: BRÖKER, Klaus, 49163 Bohmte-Hunteburg (DE); BUHL, Reinhard, 49163 Bohmte (DE); KLEINER, Wolfgang, 49419 Wagenfeld (DE); RECHTIEN, Martin, 49434 Neuenkirchen-Vörden (DE)
(86) Internationale Anmeldenummer: DE0100517
(87) Internationale Veröffentlichungsnummer: WO01059313

(56) Entgegenhaltungen:
- EP-A- 0 860 619
- DE-C- 670 444
- DE-C- 844 234
- GB-A- 2 100 337
- US-A- 2 861 827
- US-A- 3 850 047

## Beschreibung

Kugelgelenke finden auf vielfältigsten Gebieten, aber insbesondere im Fahrzeugbau, in Baugruppen für die Radaufhängung Einsatz.
Derartige Kugelgelenke (z.B. GB 2 100 337 A) bestehen aus einem Gelenkgehäuse mit einer Gehäuseausnehmung, einem in der Gehäuseausnehmung mit seiner mit einem Oberflächenschutz versehenen Gelenkkugel gelagerten Gelenkzapfen, dessen Zapfenabschnitt aus einer Gehäuseöffnung herausragt. Die Gelenkkugel wird in einer Lagerschale angeordnet, die für die hohen Belastungen derartiger Gelenke in Kraftfahrzeugen notwendig ist. Darüber hinaus weisen derartige Kugelgelenke einen Dichtungsbalg auf, der zwischen dem Gelenkgehäuse und dem Gelenkzapfen vorgesehen ist.

Sehr wesentlich für die dauerhafte Funktion (Langzeitlebensdauer) des Kugelgelenks ist es dabei, konstruktive Maßnahmen zu treffen, die eine Dauerschmierung mit Gelenkfett ermöglichen. Dadurch wird die Reibung zwischen den relativ zueinander beweglichen Bauteilen erheblich reduziert. Als Fettreservoir dient bei herkömmlichen Gelenken ein Dichtungsbalg.

Der Dichtungsbalg ist jedoch auch für die Abdichtung der Gelenkbauteile von Kugelgelenken für Kraftfahrzeuge gegenüber Verunreinigungen und Umwelteinflüssen unentbehrlich.

Ein weiteres Problem optimaler Gelenkfunktionen ergibt sich aufgrund der Tatsache, dass Kraftfahrzeuge häufig mit Hochdruckreinigungsgeräten gesäubert werden. Wie festgestellt wurde, erzeugen diese Geräte Drücke, die in der Lage sind, den Dichtungsbalg zumindest kurzzeitig und geringfügig von den Gelenkbauteilen abzuheben. Dadurch auftretende Undichtheiten erlauben den Eintritt von unerwünschten Medien in das Gelenkinnere.

Technische Problemstellung der vorliegenden Erfindung ist es, eine verbesserte Abdichtung des Kugelgelenkes gegen Eindringen von Verunreinigungen oder Feuchtigkeit zwischen Lagerschale und Gelenkkugel bei gleichzeitig optimierter Schmierfunktion der beweglichen Gelenkbauteile zu erreichen.

Die technische Problemstellung wird erfindungsgemäß durch ein Kugelgelenk mit den Merkmalen des Hauptanspruchs 1 gelöst.

Danach wird vorgeschlagen, zwischen dem Gelenkgehäuse und der Gelenkkugel ein Dichtelement anzuordnen, das unter elastischer Vorspannung mit der Gelenkkugel in Gleitkontakt steht.

Für die Umsetzbarkeit der Erfindung ist es wesentlich, dass die Gelenkkugel mit einem Oberflächenschutz versehen ist, sodass sie infolge dieser Behandlung eine äußerst geringe Rauheit sowie einen Korrosionsschutz aufweist, weil nur dadurch eine lange Lebensdauer der mit der Gelenkkugel in Gleitkontakt stehenden Dichtlippe gewährleistbar ist. Die maximale Rauhtiefe (Ry) sollte dabei etwa zwischen 1 und 5 µm betragen.

Die Erfindung bringt mehrere Vorteile mit sich. So könnten innerhalb des Kugelgelenkes zwei unterschiedliche Fettsorten zum Einsatz gebracht werden, ohne dass eine Vermischung zu befürchten ist. Eine erste Schmierfettsorte mit optimalen Schmier- und Gleiteigenschaften ist dabei zwischen Gelenkkugel und Lagerschale vorgesehen, wobei die Dichtlippe das Fettreservoir abdichtet und in diesem Gelenkbereich hält. Eine zweite Fettsorte, wird im Dichtungsbalg aufgenommen und erfüllt hauptsächlich eine Abdichtfunktion.

Das zusätzliche Dichtelement innerhalb des Kugelgelenkes gewährleistet somit nicht nur eine optimale Gelenkschmierung, sondern gleichzeitig auch eine optimale Abdichtfunktion, was insbesondere bei Einsatz von Hochdruckreinigungsgeräten von erheblichem Vorteil gegenüber bisher bekannten Ausrührungen ist.

Unter Umständen könnte ein erfindungsgemäßes Kugelgelenk sogar gänzlich ohne Dichtungsbalg auskommen. Auf jeden Fall können aber die Aurwendungen zur Erreichung eines Festsitzes des Dichtungsbalges reduziert werden, sodass es möglich erscheint, auf den Einsatz von Spannringen zu verzichten, wodurch nicht nur die Zahl der vorhandenen Bauteile sondern auch die Aufwendungen bei der Montage erfindungsgemäßer Kugelgelenke und damit die Kosten reduziert werden können.

Vorteilhafte Weiterbildungen der Erfindung sind Gegenstand der Unteransprüche.

So wird entsprechend einer weiteren Ausgestaltung der Erfindung vorgeschlagen, das Dichtelement als einen einteilig mit der Lagerschale ausgebildeten Ring auszuführen, welcher auf der Seite der Gehäuseöffnung eine dichtende Verbindung zwischen der Oberfläche der Gelenkkugel und der Innenoberfläche der Gehäuseausnehmung herstellt. Eine derartige Dichtelementgestaltung gestattet in einfacher Weise eine Abdichtung zwischen der Gelenkkugel und dem Gelenkgehäuse, wobei das Dichtelement ein an der offenen Seite der Lagerschale anvulkanisierter oder angeklebter oder ein einteilig mit der Lagerschale im Zweikomponentenverfahren hergestellter Dichtring sein kann.

Als Dichtelement ist jedoch ebenso eine an der Seite der Gehäuseöffnung unmittelbar an dem Gelenkgehäuse oder der Lagerschale angespritzte beziehungsweise eine zwischen Lagerschale und Innenoberfläche der Gehäuseausnehmung eingeklemmte Dichtlippe einsetzbar, die unter elastischer Vorspannung an der Gelenkkugel anliegt. Die Dichtlippe weist dabei einen spitz zulaufenden Querschnitt auf, sodass sie mit ihrer Spitze eine Abstreifwirkung an der Gelenkkugel hervorruft.

Das Dichtelement kann aus thermoplastischem Material, wie beispielsweise POM, PUR, Polyamid (PA), Gummi- oder anderen Elastomermaterialien bestehen, was sowohl seine einfache Herstellbarkeit, als auch seine einfache Verbindung mit dem Gelenkgehäuse bzw. mit der Lagerschale ermöglicht.

Weiterhin ist es vorteilhaft, wenn die an der Gelenkkugel anliegende Dichtfläche des Dichtelementes eine zusätzliche Beschichtung aus einem reibungsarmen Material aufweist. Dies kann beispielsweise Teflon oder ein anderer geeigneter Werkstoff sein.

Darüber hinaus ist es möglich, bei einem erfindungsgemäßen Kugelgelenk die an der Gelenkkugel anliegende Dichtfläche des Dichtelementes nach ihrer Herstellung künstlich zu verspröden, was infolge der dadurch vergrößerten Oberfläche insbesondere die Dichtwirkung verbessert.

Um den Eintrag von Verunreinigungen in den Bereich zwischen Lagerschale und Gelenkkugel zu vermeiden, ist es ferner vorteilhaft, einen fließenden Übergang von der Gelenkkugel zu dem Zapfenabschnitt des Gelenkzapfens vorzusehen, das heißt, den Übergangsradius R zwischen der Gelenkkugel und dem Zapfenabschnitt des Gelenkzapfens minimal zu halten. Erfindungsgemäß soll in diesem Bereich keine Kehlung vorhanden sein.

Nachfolgend soll die Erfindung anhand eines Ausführungsbeispiels näher erläutert werden. Dabei zeigen:
- Figur 1:: eine ausschnittsweise Schnittdarstellung eines Kugelgelenkes nach dem Stand der Technik,
- Figur 2:: eine ausschnittsweise Schnittdarstellung eines erfindungsgemäßen Kugelgelenkes
und
- Figur 3:: Eine ausschnittsweise Schnittdarstellung eines weiteren erfindungsgemäßen Kugelgelenkes.

In den Figuren sind beispielhaft ein aus dem Stand der Technik bekanntes Kugelgelenk sowie zwei erfindungsgemäße Kugelgelenke dargestellt.

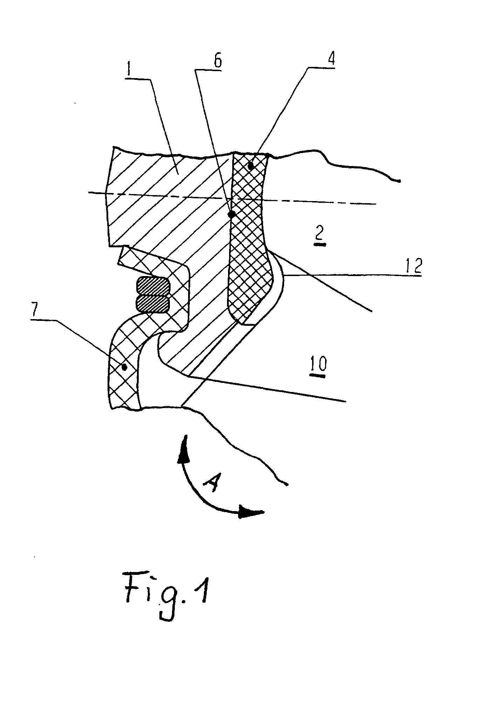

Die Figur 1 soll bisher bekannte Ausführungen darstellen, die insbesondere den Nachteil aufweisen, dass im Übergangsbereich zwischen der Gelenkkugel 2 und dem Zapfenabschnitt des Kugelzapfens 10 eine Kehlung 12 vorhanden ist. Der in Richtung des Pfeiles A verschwenkbare Kugelzapfen 10 transportiert bei seiner Bewegung Verunreinigungen, die sich in der genannten Kehlung 12 befinden unmittelbar in die Lagerfläche zwischen Lagerschale 4 und Gelenkkugel 2, was anschaulich aus der Darstellung in Figur 1 hervorgeht.

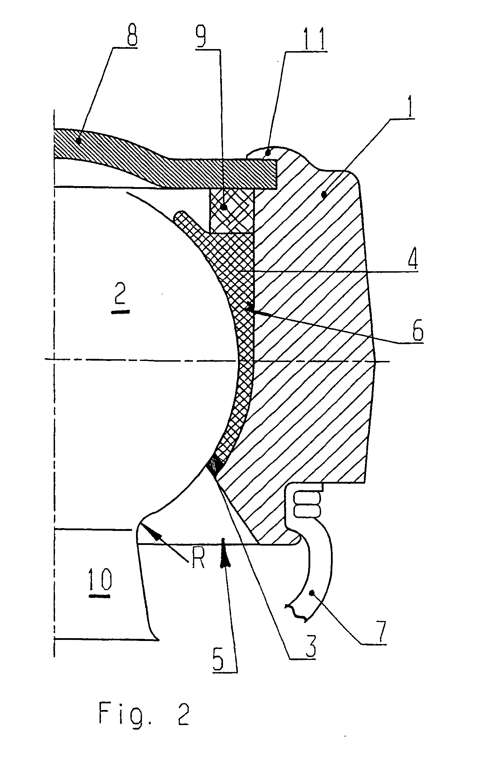

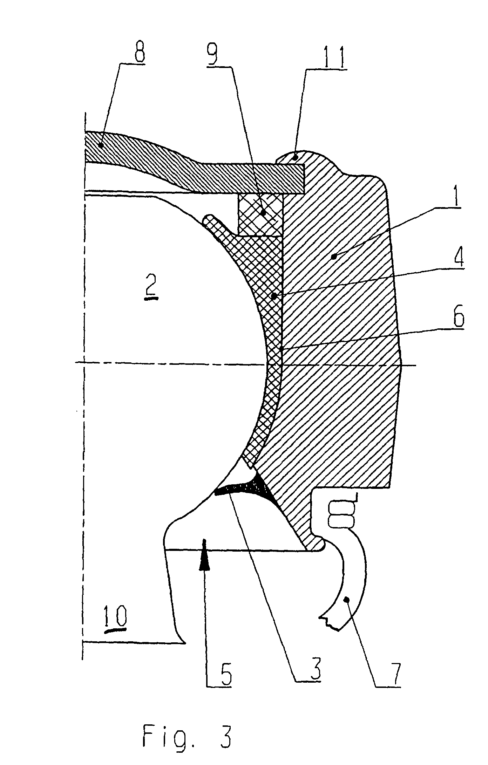

In der Gehäuseausnehmung 6 eines in den Figuren 2 und 3 gezeigten, erfindungsgemäßen Gelenkgehäuses 1 ist eine mit einem Oberflächenschutz versehene Gelenkkugel 2 eines Gelenkzapfens 10 angeordnet. Die Gelenkkugel ist in der Lagerschale 4 in mehreren Bewegungsrichtungen beweglich gelagert. Die Lagerschale 4 ist ebenfalls in die Gehäuseausnehmung 6 eingesetzt. Ein Dichtungsbalg 7 dient als Fettreservoir und zur Abdichtung der beweglichen Kugelgelenkbauteile gegenüber der Umgebung. Er liegt einerseits an dem Gelenkgehäuse 1 und andererseits an dem Gelenkzapfen 10 an. Das Gelenkgehäuse 1 ist auf der Zapfenaustrittsseite mit einer Gehäuseöffnung 5 versehen. Gegenüberliegend dieser Gehäuseöffnung ist es mittels eines Verschlussdeckels 8 verschlossen. Dieser wird durch Materialverformung eines Gehäuserandes 11 in dem Gelenkgehäuse 1 festgelegt. Zur Lagefixierung der Lagerschale 4 wird zwischen dem Verschlussdeckel 8 und der Lagerschale 4 ein Toleranzring 9 eingelegt.

Bei der Ausführung entsprechend Figur 2 ist an der Gehäuseöffnungsseite 5 des Gelenkgehäuses 1 an der Lagerschale 4 ein Dichtelement 3 in Form eines unter elastischer Vorspannung in Gleitkontakt mit der Gelenkkugeloberfläche stehenden Dichtringes anvulkanisiert, bei dem es sich um einen Gummiring handelt.

Die Ausführung in Figur 3 zeigt demgegenüber als Dichtelement 3 eine an dem Gelenkgehäuse 1 anvulkanisierte und unter elastischer Vorspannung an der Gelenkkugeloberfläche anliegende Dichtlippe. Beide Ausführungen eines erfindungsgemäßen Kugelgelenkes weisen im Übergangsbereich zwischen Gelenkkugel 2 und Zapfenabschnitt des Gelenkzapfens 10 einen extrem kleinen Radius auf, sodass eine Kehlung in diesem Bereich vermieden wird.

### Liste der verwendeten Bezugszeichen:

- 1.: Gelenkgehäuse
- 2.: Gelenkkugel
- 3.: Dichtelement
- 4.: Lagerschale
- 5.: Gehäuseöffnung
- 6.: Gehäuseausnehmung
- 7.: Dichtungsbalg
- 8.: Deckel
- 9.: Toleranzring
- 10.: Gelenkzapfen
- 11.: Gehäuserand
- 12.: Kehlung

## Patentansprüche

1. Kugelgelenk bestehend aus einem wenigstens einseitig offenen Gelenkgehäuse (1) mit einer Gehäuseausnehmung (6), einem in der Gehäuseausnehmung (6) mit seiner mit einem Oberflächenschutz versehenen Gelenkkugel (2) gelagerten Gelenkzapfen (10), dessen Zapfenabschnitt aus einer Gehäuseöffnung (5) herausragt, einer zwischen dem Gelenkgehäuse (1) und der Gelenkkugel (2) angeordneten Lagerschale (4), sowie einem Dichtungsbalg (7) zwischen Gelenkgehäuse (1) und Gelenkzapfen (10), **dadurch gekennzeichnet, dass** zwischen dem Gelenkgehäuse (1) und der Gelenkkugel (2) ein Dichtelement (3) angeordnet ist, das unter elastischer Vorspannung mit der Gelenkkugel (2) in Gleitkontakt steht.

2. Kugelgelenk nach Anspruch 1, **dadurch gekennzeichnet, dass** das Dichtelement (3) ein einteilig mit der Lagerschale (4) ausgebildeter Ring ist, welcher auf der Seite der Gehäuseöffnung (5) eine dichtende Verbindung zwischen der Oberfläche der Gelenkkugel (2) und der Innenoberfläche der Gehäuseausnehmung (6) herstellt.

3. Kugelgelenk nach Anspruch 2, **dadurch gekennzeichnet, dass** das Dichtelement (3) ein an der offenen Seite der Lagerschale (4) anvulkanisierter oder angeklebter oder ein einteilig mit der Lagerschale (4) im Zweikomponentenverfahren hergestellter Dichtring ist.

4. Kugelgelenk nach Anspruch 1, **dadurch gekennzeichnet, dass** das Dichtelement (3) eine an der Seite der Gehäuseöffnung (5) an dem Gelenkgehäuse angespritzte Dichtlippe ist, die unter elastischer Vorspannung an der Gelenkkugel (2) anliegt.

5. Kugelgelenk nach Anspruch 1, **dadurch gekennzeichnet, dass** das Dichtelement (3) eine an der Seite der Gehäuseöffnung (5) an der Lagerschale (4) angespritzte oder eine zwischen Lagerschale (4) und Innenoberfläche der Gehäuseausnehmung (6) eingeklemmte Dichtlippe ist, die unter elastischer Vorspannung an der Gelenkkugel (2) anliegt.

6. Kugelgelenk nach einem der vorstehend genannten Ansprüche, **dadurch gekennzeichnet, dass** das Dichtelement (3) aus thermoplastischem Material, wie besispielsweise POM, Polyamid (PA), PUR, Gummi- oder Elastomermaterial bzw. aus einem elastischen Mehrkomponentenwerkstoff besteht.

7. Kugelgelenk nach einem der vorstehend genannten Ansprüche, **dadurch gekennzeichnet, dass** die an der Gelenkkugel (2) anliegende Dichtfläche des Dichtelementes (3) eine Beschichtung aus einem reibungsarmen Werkstoff aufweist.

8. Kugelgelenk nach einem der vorstehend genannten Ansprüche, **dadurch gekennzeichnet, dass** die an der Gelenkkugel (2) anliegende Dichtfläche des Dichtelementes (3) nach ihrer Herstellung versprödet wird.

9. Kugelgelenk nach einem der vorstehend genannten Ansprüche, **dadurch gekennzeichnet, dass** der Übergangsradius R zwischen Gelenkkugel (2) und Zapfenabschnitt des Gelenkzapfens (10) minimal gehalten oder gar nicht vorhanden ist und die maximale Oberflächenrauheit (Ry) der Gelenkkugel zwischen 1 und 5 µm beträgt.

## Claims

1. Ball-and-socket joint consisting of a joint housing (1), which is open at least on one side and has a housing recess (6), of a joint pin (10), which is mounted in the housing recess (6) with its joint ball (2) provided with a surface protection and the pin portion of which projects out of a housing opening (5), of a bearing bush (4), which is disposed between the joint housing (1) and the joint ball (2), and of a sealing bellows (7) between the joint housing (1) and the joint pin (10), **characterised in that** a sealing element (3) is disposed between the joint housing (1) and the joint ball (2) and is in sliding contact with the joint ball (2), while being elastically preloaded.

2. Ball-and-socket joint according to Claim 1,
**characterised in that** the sealing element (3) is a ring which is integral with the bearing bush (4) and which establishes at the side of the housing opening (5) a sealing connection between the surface of the joint ball (2) and the inner surface of the housing recess (6).

3. Ball-and-socket joint according to Claim 2,
**characterised in that** the sealing element (3) is a sealing ring which is vulcanised or stuck onto the open side of the bearing bush (4) or a sealing ring which is produced integrally with the bearing bush (4) in a two-component process.

4. Ball-and-socket joint according to Claim 1,
**characterised in that** the sealing element (3) is a sealing lip which is moulded onto the side of the housing opening (5) at the joint housing and lies against the joint ball (2), while being elastically preloaded.

5. Ball-and-socket joint according to Claim 1,
**characterised in that** the sealing element (3) is a sealing lip which is moulded onto the side of the housing opening (5) at the bearing bush (4) or a sealing lip which is clamped between the bearing bush (4) and the inner surface of the housing recess (6) and lies against the joint ball (2), while being elastically preloaded.

6. Ball-and-socket joint according to any one of the preceding Claims, **characterised in that** the sealing element (3) consists of thermoplastic material such as, for example, POM, polyamide (PA), PUR, rubber or elastomer material or of an elastic multi-component material.

7. Ball-and-socket joint according to any one of the preceding Claims, **characterised in that** the sealing face of the sealing element (3) which lies against the joint ball (2) has a coating of a low-friction material.

8. Ball-and-socket joint according to any one of the preceding Claims, **characterised in that** the sealing face of the sealing element (3) which lies against the joint ball (2) is embrittled after being produced.

9. Ball-and-socket joint according to any one of the preceding Claims, **characterised in that** the transition radius (R) between the joint ball (2) and the pin portion of the joint pin (10) is kept to a minimum or is even non-existent and the maximum surface roughness (Ry) of the joint ball is between 1 and 5 µm.

## Revendications

1. Joint à rotule constitué d'un boîtier de joint (1) ouvert au moins d'un côté, comprenant un logement (6) de boîtier, un pivot de joint (10) monté dans le logement (6) de boîtier avec sa rotule de joint (2) pourvue d'une protection superficielle, pivot dont un segment de pivot fait saillie d'une ouverture (5) du boîtier, une coquille de support usinée (4), disposée entre le boîtier de joint (1) et la rotule de joint (2), ainsi qu'un soufflet d'étanchéité (7) entre le boîtier de joint (1) et le pivot de joint (10), **caractérisé en ce qu'**un élément d'étanchéité (3) est disposé entre le boîtier de joint (1) et la rotule de joint (2), et se tient en contact glissant avec la rotule de joint (2) sous pré-contrainte élastique.

2. Joint à rotule selon la revendication 1, **caractérisé en ce que** l'élément d'étanchéité (3) est une bague réalisée d'une seule pièce avec la coquille de support (4), qui établit une liaison étanche sur le côté de l'ouverture (5) du boîtier entre la surface de la rotule (2) du joint et la surface intérieure du logement (6) du boîtier.

3. Joint à rotule selon la revendication 2, **caractérisé en ce que** l'élément d'étanchéité (3) est une bague d'étanchéité, reliée au côté ouvert de la coquille de support (4) par vulcanisation ou par collage, ou fabriquée d'une seule pièce avec la coquille de support (4) par le procédé à deux composants.

4. Joint à rotule selon la revendication 1, **caractérisé en ce que** l'élément d'étanchéité (3) est une lèvre d'étanchéité moulée par injection sur le boîtier de joint sur le côté de l'ouverture (5) du boîtier, et qui prend appui sur la rotule (2) du joint sous pré-contrainte élastique.

5. Joint à rotule selon la revendication 1, **caractérisé en ce que** l'élément d'étanchéité (3) est une lèvre d'étanchéité moulée par injection sur le côté de l'ouverture (5) du boîtier sur la coquille de support (4), ou serrée entre la coquille de support (4) et la surface intérieure du logement (6) du boîtier, et qui prend appui sur la rotule (2) du joint sous pré-contrainte élastique.

6. Joint à rotule selon l'une des revendications précédentes, **caractérisé en ce que** l'élément d'étanchéité (3) est constitué en un matériau thermoplastique, comme par exemple le POM, un polyamide (PA), du PUR, un matériau de caoutchouc ou élastomère, ou en une matière première à composants multiples.

7. Joint à rotule selon l'une quelconque des revendications précédentes, **caractérisé en ce que** la surface d'étanchéité de l'élément d'étanchéité (3) prenant appui sur la rotule (2) du joint comporte un revêtement en une matière à faible frottement.

8. Joint à rotule selon l'une des revendications précédentes, **caractérisé en ce que** la surface d'étanchéité de l'élément d'étanchéité (3) prenant appui sur la rotule (2) de joint est fragilisée après sa fabrication.

9. Joint à rotule selon l'une des revendications précédentes, **caractérisé en ce que** le rayon de transition R entre la rotule (2) du joint et le segment de pivot du pivot de joint (10) est maintenu minimal ou n'est même pas prévu, et **en ce que** la rugosité superficielle (Ry) de la rotule du joint se situe entre 1 et 5 µm.
